# EUROPÄISCHE PATENTSCHRIFT

(11) **EP 1 048 885 B1**
(45) Veröffentlichungstag und Bekanntmachung des Hinweises auf die Patenterteilung: **19.05.2004**
(21) Anmeldenummer: 00106279.3
(22) Anmeldetag: 23.03.2000
(51) Int. Cl.: F16L 41/06, F16L 41/04, F16L 47/00, F16L 41/08, B23B 51/04

(54) **Vorrichtung zur Herstellung einer Verbindung einer Armatur mit einem Rohr**
Apparatus for manufacturing a connection of a tap with a conduit
Dispositif pour fabrication d'une connexion d'une robinetterie avec un tuyau

(30) Priorität: 27.04.1999 DE 19918952
(43) Veröffentlichungstag der Anmeldung: 02.11.2000
(73) Patentinhaber: Friatec Aktiengesellschaft, 68229 Mannheim (DE)
(72) Erfinder: Sichler, Wolfgang, 68239 Mannheim (DE); Schmitt, Harald, 68309 Mannheim (DE); Rothermel, Alexander, 69198 Schriesheim (DE)
(74) Vertreter: Schmitt, Meinrad, Dipl.-Ing.

(56) Entgegenhaltungen:
- EP-A- 0 058 517
- US-A- 3 976 091
- US-A- 4 573 628
- US-A- 4 761 024
- PATENT ABSTRACTS OF JAPAN vol. 1998, no. 08, 30. Juni 1998 (1998-06-30) & JP 10 061862 A (OSAKA GAS CO LTD), 6. März 1998 (1998-03-06)

## Beschreibung

Die Erfindung bezieht sich auf eine Vorrichtung zur Herstellung einer Verbindung einer Armatur mit einem Rohr gemäß den im Oberbegriff des Patentanspruchs 1 angegebenen Merkmalen.

Aus der japanischen Patentanmeldung gemäß JP 10061862A ist eine derartige Vorrichtung zur Herstellung einer Verbindung einer Armatur, welche ein Sattelstück und einen Stutzen enthält, mit einem Rohr bekannt. Die Armatur wird mittels einer Rohrschelle auf dem Rohr fixiert und nachfolgend wird durch Elektroschweißen das Sattelstück mit der Außenfläche des Rohres dicht und dauerhaft verbunden. Die Armatur und das Rohr bestehen aus thermoplastischem, schweißbaren Kunststoff, wie insbesondere Polyäthylen, wobei die Armatur und insbesondere deren Sattelstück eine Heizwicklung zum Elektroschweißen enthält. Danach wird die Vorrichtung mit dem Stutzen verbunden und mit einem geeigneten Bohrer eine Öffnung in die Wandung des Rohres eingebracht. Für kleinere und mittlere Rohraußen-durchmesser bis ca. 400 mm ist eine derartige Anbohrvorrichtung in der Praxis mit einem vertretbaren Aufwand einsetzbar. Für größere Rohraußen-durchmesser wird im Hinblick auf die erforderliche Größe der Vorrichtung deren Handhabung erheblich erschwert, wenn nicht gar unter Berücksichtigung der praktischen Einsatzbedingunqen, beispielsweise im Graben einer verlegten Rohrleitung, unmöglich. Ferner erfordert eine zum Verschweißen der Armatur auf der Außenfläche des Rohres benötigte Rohr- oder Unterschelle einen zusätzlichen Fertigungs- und Montageaufwand.

Hiervon ausgehend liegt der Erfindung die Aufgabe zugrunde, die Vorrichtung der genannten Art dahingehend weiterzubilden, daß bei kompakter Bauweise eine funktionssichere Verbindung mit dem Rohr problemlos herstellbar und das Einbringen der Öffnung in das Rohr in einfacher Weise durchführbar ist. Die Vorrichtung soll eine funktionsgerechte und problemlose Handhabung ermöglichen. Desweiteren soll die Vorrichtung ein geringes Gewicht aufweisen und ohne zusätzliche Maßnahmen die Fixierung der Armatur und deren Verschweißen mit dem Rohr sicherstellen.

Die Lösung dieser Aufgabe erfolgt gemäß den im Patentanspruch 1 angegebenen Merkmalen.

Die erfindungsgemäße Vorrichtung zeichnet sich durch eine funktionsgerechte Konstruktion aus und ermöglicht sowohl das Festspannen der Armatur auf dem Rohr zur Herstellung der Schweißverbindung als auch das Einbringen der Öffnung in das Rohr im Bereich des genannten Stutzens. Die Vorrichtung enthält eine auf den Stutzen der Armatur aufsetzbare Traverse sowie eine in der Traverse angeordnete Spanneinrichtung, mittels welcher die Armatur zur Vorbereitung und Durchführung der Verschweißung auf der Außenfläche des Rohres festspannbar ist. Die Traverse enthält ferner eine Trenneinrichtung, welche das Einbringen der Öffnung in die Rohrwand ermöglicht. Mittels der Spanneinrichtung wird das aus der Rohrwand herausgetrennte Rohrstück gesichert, welches bei der Demontage der erfindungsgemäßen Vorrichtung mitentfernt wird, ohne daß das Hineinfallen in das Rohr zu befürchten wäre.

Weiterbildungen und besondere Ausgestaltungen der Erfindung sind in den Unteransprüchen sowie der Beschreibung eines besonderen Ausführungsbeispiels angegeben.

Die Erfindung wird nachfolgend anhand eines Ausführungsbeispiels näher erläutert, ohne daß insoweit eine Beschränkung erfolgt. Es zeigen:
- Fig. 1: eine perspektivische Ansicht der Vorrichtung,
- Fig. 2: teilweise geschnitten die Vorrichtung mit der Armatur und einem Rohr,
- Fig. 3: eine Aufsicht auf die Vorrichtung,
- Fig. 4: einen Schnitt durch die Vorrichtung entlang Schnittlinie A gemäß Fig. 3,
- Fig. 5: einen Schnitt entlang Schnittlinie B gemäß Fig. 4.

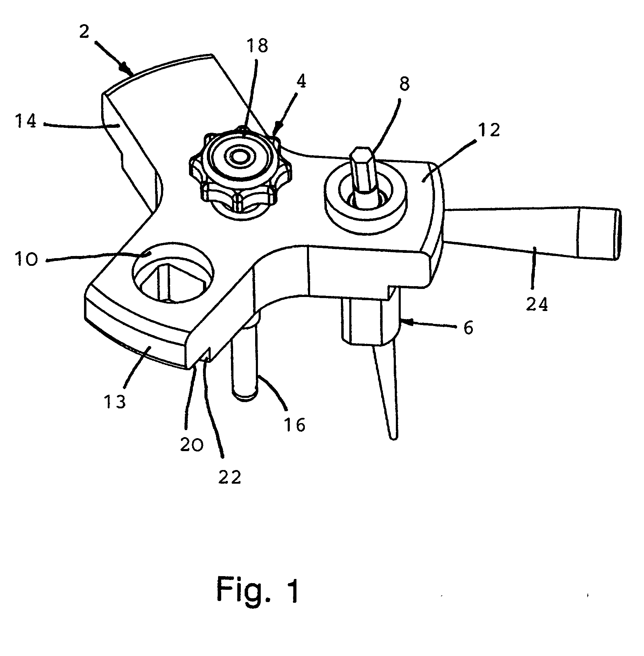

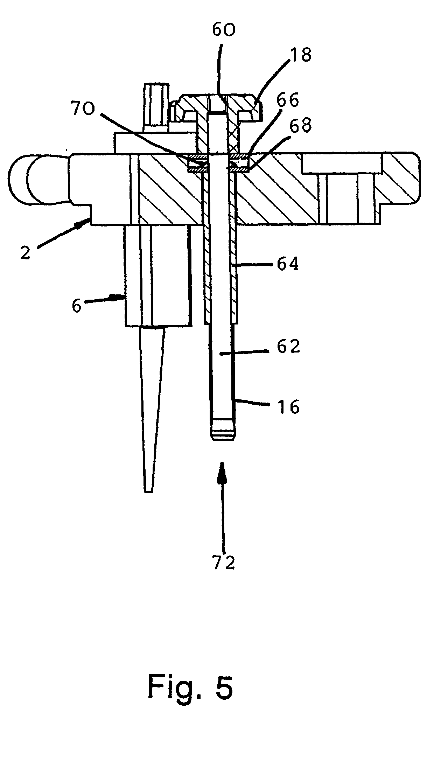

Fig. 1 zeigt eine Ansicht der Vorrichtung, welche eine auf den Stutzen der Armatur aufsetzbare Traverse 2 enthält. Die Traverse 2 ist in zweckmäßiger Weise sternförmig mit drei Armen ausgebildet und enthält im Zentrum eine Spanneinrichtung 4 sowie zu dieser radial beabstandet eine Trenneinrichtung 6. Im Rahmen der Erfindung kann die Traverse auch als Platte oder kreisförmige Scheibe ausgebildet sein oder eine andere Anzahl von Armen aufweisen. Die Trenneinrichtung 6 ist mittels einer hier nicht dargestellten Bohrmaschine herkömmlicher Bauart betätigbar, in deren Spannfutter der nach oben ragende Sechskant 8 festspannbar ist. In eine Ausnehmung 10 der Traverse 2 kann die Trenneinrichtung 6 oder eine andere Trenneinrichtung eingesetzt werden, um eine Öffnung mit einem anderen Durchmesser in das Rohr einbringen zu können. Aufgrund der sternförmigen Ausbildung der Traverse 2 mit zweckmäßig drei Armen 12, 13, 14 ist eine stabile Konstruktion mit geringem Materialeinsatz und niedrigem Gewicht erreicht. Die Spanneinrichtung 4 ist bevorzugt im Zentrum der Traverse angeordnet und enthält ein mit dem Rohr in Verbindung bringbares Spannelement 16 und ein bevorzugt manuell betätigbares Betätigungselement 18, hier in Form eines Sterngriffes bzw. Handrades. Das Spannelement 16 kann in einfacher Weise beispielsweise ein hier nicht dargestelltes, selbstschneidendes Schraubgewinde aufweisen, welches durch Drehen des Betätigungselements in das Rohr eingeschraubt werden kann. In diesem Fall ist das Spannelement 16 in der Traverse 2 axial festgelegt. Eine weitere bevorzugte Ausgestaltung wird nachfolgend anhand von Fig. 5 erläutert. An der Unterseite der Traverse 2, vorzugsweise an deren Armen 12, 13, 14 sind Auflageflächen 20 und/oder Zentrierflächen 22 für den erwähnten Stutzen der Armatur vorgesehen. Mittels eines Handgriffes 24 kann die Traverse zum Einbringen der Öffnung in das Rohr bezüglich des Stutzens manuell gedreht werden.

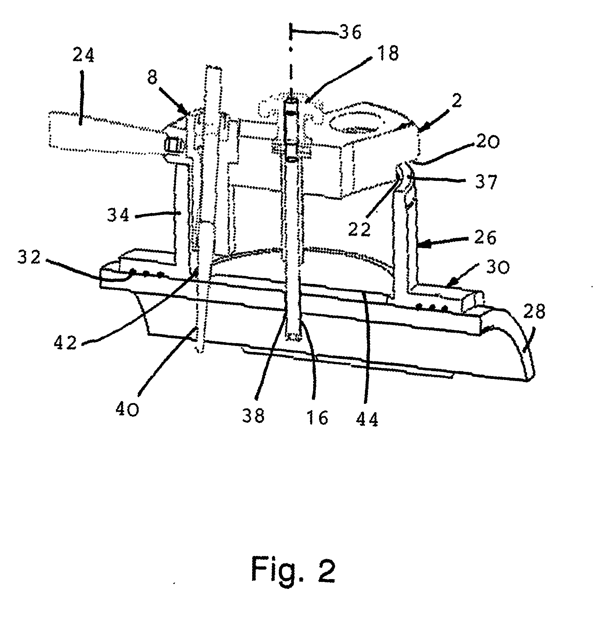

Fig. 2 zeigt teilweise geschnitten die erfindungsgemäße Vorrichtung mit der Traverse 2, die als Sattelstück ausgebildete Armatur 26 und das Rohr 28, welche im wesentlichen aus schweißbarem Kunststoff, wie insbesondere Polyäthylen, bestehen. Die Kunststoffarmatur 26 enthält einen Sattel 30, welcher auf der Außenfläche des Kunststoffrohres 28 angeordnet ist und eine schematisch dargestellte Heizwicklung 32 zum Verschweißen mit dem Rohr 28 aufweist. Die Armatur 26 enthält ferner einen Stutzen 34, auf dessen oberes Ende bzw. axiale Stirnfläche 37 die Traverse 2 aufgesetzt ist. Wie ersichtlich, greift die Zentrierfläche 22 oben in das Innere des Stutzens 34 ein, wobei der Durchmesser der Zentrierfläche 22 derart auf den Stutzeninnendurchmesser abgestimmt sind, daß einerseits eine Zentrierung der Vorrichtung bezüglich des Stutzens 34 erreicht ist und andererseits die Traverse 2 um die Achse 36 bezüglich der Armatur 26 drehbar ist.

Die Funktionsweise der erfindungsgemäßen Vorrichtung soll nachfolgend näher erläutert werden. Zunächst wird die Armatur 26 an der gewünschten Stelle auf der Außenfläche des Rohres 28 positioniert und die Mitte der einzubringen Öfffnung auf der Rohraußenfläche markiert. Daraufhin wird ohne die erfindungsgemäße Vorrichtung mittels eines Bohrers ein Zentrierloch 38 für die Spanneinrichtung in die Rohrwandung eingebracht. Nach dem Aufsetzen der Vorrichtung auf den Stutzen 34 der Armatur 26 wird das Spannelement 16 in das Zentrierloch 38 eingeführt. Der Durchmesser des Zentrierloches 28 ist auf den Durchmesser des Spannelements 16 abgestimmt. Nunmehr erfolgt das Festspannen der Armatur 26 mittels der erfindungsgemäßen Vorrichtung durch Betätigen des Elements 18, und zwar insbesondere durch Einleitung einer Drehbewegung und/oder einer axialen Zugbewegung des als Handrad oder Sterngriff ausgebildeten Betätigungselements 18. Es sei an dieser Stelle festgehalten, daß im Rahmen der Erfindung zum Festspannen keine zusätzlichen Mittel, wie insbesondere eine mit dem Sattel 30 zu verbindende Unterschelle oder dergleichen erforderlich sind. In einem weiteren Verfahrensschritt wird durch Beaufschlagung der Heizwicklung 32 mit Strom bzw. Spannung die flüssigkeits- und/oder druckdichte Elektroschweißverbindung zwischen der Armatur 26 und dem Rohr 28 hergestellt. Hierbei wird der zum Verschweißen erforderliche Anpreßdruck mittels der erfindunsgemäßen Vorrichtung aufrechterhalten. Das Festspannen der Armatur 26 erfolgt bei unmittelbarem Kraftschluß der Traverse 2 über den Stutzen 26 sowie das in das Zentrierloch 38 des Rohres 28 zentral eingreifende Spannelement 16. Nach Herstellung der Schweißverbindung wird die Spanneinrichtung 4 derart gelöst, daß zum einen die während der Verschweißung infolge des Schmelzdrucks entstandene Spannung gelöst wird und zum anderen die Traverse 2 um die Achse 36 bezüglich des Stutzens 34 rotatorisch bewegbar ist. Während der bisher erläuterten Verfahrensschritte ist das Trennwerkzeug 40, und zwar abweichend von der Zeichnung, nach oben aus der Traverse 2 derart herausbewegt, daß seine untere Spitze sich über der Rohraußenfläche befindet.

In einem weiteren Verfahrensschritt wird das Trennwerkzeug 40, welches insbesondere als Bohrfräser ausgebildet ist, in Betrieb genommen. Hierzu wird das obere Ende bzw. der Sechskant 8 des Trennwerkzeugs 40 in die hier nicht weiter dargestellte Bohrmaschine eingespannt. Das untere Ende bzw. die Spitze des Trennwerkzeuges 40 wird nunmehr auf die Rohraußenfläche aufgesetzt. Wesentlich ist hierbei, daß das Trennwerkzeug 40 am Scheitelpunkt der Sattelauflage mit der Außenfläche des Rohres in Eingriff gebracht wird, also im wesentlichen in der Axialebene des Rohres, in welcher die Achse 36 liegt. Mittels des Trennwerkzeugs 40 wird im Scheitelpunkt 42 die Rohrwand komplett durchtrennt bzw. durchbohrt. Anschließend wird bei laufender Bohrmaschine die Traverse um die Achse 36 gedreht, wobei mittels des Trennwerkzeugs bzw. Bohrfräsers 40 entsprechend dessen radialen Abstandes zur Achse 36 eine Öffnung in das Rohr 28 eingebracht bzw. gefräst wird. Der Handgriff 24 erleichtert die von der Bedienungsperson manuell durchzuführende Drehung der Traverse 2. Die Drehung der Traverse 2 wird bei Blickrichtung von oben auf die Traverse 2 bevorzugt im Uhrzeigersinn durchgeführt. Hat nach einer Drehung von 360° der Traverse die Trenneinrichtung 6 wieder die dargestellte Position erreicht, so ist das im wesentlichen kreisförmige Rohrstück 44 aus der Rohrwand herausgetrennt. Das Rohrstück 44 wird mittels des Spannelements 16 gehalten und kann nicht in das Innere des Rohres 28 hineinfallen. Im abschließenden Verfahrensschritt wird die erfindunsgemäße Vorrichtung nach oben vom Stutzen 34 abgenommen, wobei gleichzeitig auch das Rohrstück 44 entfernt wird. Durch weiteres Lösen der Spanneinrichtung 4 kann das Rohrstück 44 abgenommen werden.

Anstelle des erläuterten unmittelbaren Festspannens der Vorrichtung mittels des in das Zentrierloch eingreifenden Spannelements kann im Rahmen der Erfindung ein mittelbares Festspannen beispielsweise derart vorgenommen werden, daß an der markierten Stelle der Rohraußenfläche eine Schraube eingeschraubt wird, an welcher die Spanneinrichtung angreift. Desweiteren kann die Trenneinrichtung im Rahmen der Erfindung anstelle des erläuterten Bohrfräsers eine Säge oder eine kleine Trennscheibe enthalten, welche um eine zur Achse 36 im wesentlichen orthogonale Achse drehbar ist. Unabhängig von der jeweiligen Ausführungsform der Spanneinrichtung und/oder der Trenneinrichtung ist erfindungsgemäß eine kombinierte Spann- und Trennvorrichtung geschaffen, um die Armatur auf das entsprechende Rohr aufzuspannen, mit diesem zu verschweißen und anschließend die Öffnung in die Rohrwand einzubringen.

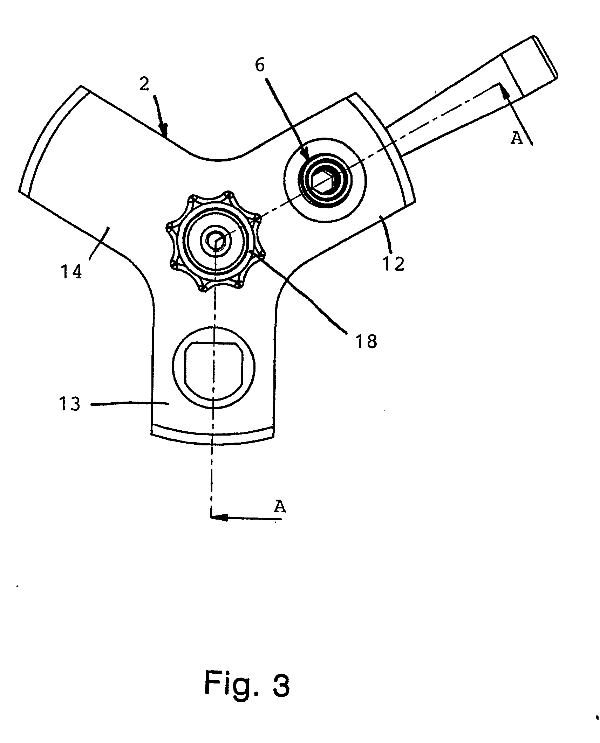

Fig. 3 zeigt eine Aufsicht von oben auf die erfindunsgemäße Vorrichtung, deren Traverse 2 die genannten drei Arme 12, 13, 14 enthält. Im Zentrum der Traverse 2 ist das als Handrad oder Sterngriff ausgebildete Betätigungselement 18 vorgesehen. In einem vorgegebenen radialen Abstand zur Spanneinrichtung enthält die Traverse 2 bzw. deren Arm 12 die Trenneinrichtung 6.

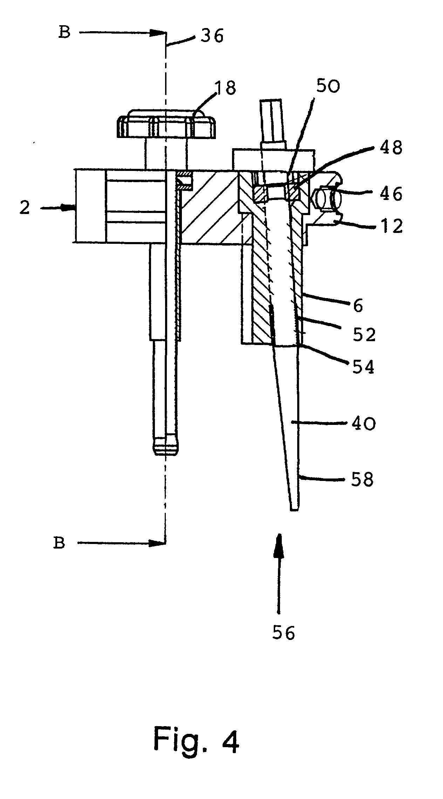

Fig. 4 zeigt einen Schnitt durch die Vorrichtung, wobei radial außen am Arm 12 eine Gewindebohrung 46 zur Befestigung des hier nicht dargestellten Handgriffes zu erkennen ist. Die Drehachse des Bohrfräsers 40 ist in zweckmäßiger Weise in einem vorgegebenen Winkel zur Achse 36 geneigt angeordnet, so daß der jeweils von der Achse 36 am weitesten beabstandete Teil der Außenfläche 58 im wesentlichen koaxial zur Achse 36 liegt. In bevorzugter Weise enthält die Trenneinrichtung 6 für den Bohrfräser 40 ein Wälzlager 48, welches mittels eines Stellringes 50 in der Traverse festgelegt ist. Die Trenneinrichtung 6 enthält ferner an ihrem unteren Ende ein Gleitlager 52 sowie eine Schiebehülse 64. Der Bohrfräser 40 und/oder die Trenneinrichtung 6 insgesamt sind in der Traverse 2 derart angeordnet, daß das Trennwerkzeug 40 in Richtung des Pfeiles 56 verschiebbar ist, um vor und während des Verschweißens außer Eingriff mit dem Rohr zu sein. Erst nachdem die Schweißverbindung der Armatur mit dem Rohr hergestellt ist, wird das Trennwerkzeug bzw. der Bohrfräser 40 in die dargestellte Position bezüglich der Traverse 2 gebracht. Die erwähnte Neigung des Bohrfräsers ist derart vorgegeben, daß die radiale Außenfläche 58 im wesentlichen koaxial zur Achse 36 liegt und somit die Innenwand der in das Rohr einzubringenden Öffnung im wesentlichen zylindrisch ist. Erfindungsgemäß kann durch entsprechende Vorgabe der Stellung des Bohrfräsers ferner eine insbesondere konische Innenwand gefräßt werden, deren Konusspitze bevorzugt außerhalb des Rohres liegt.

Fig. 5 zeigt einen weiteren Schnitt durch die erfindungsgemäße Vorrichtung mit dem Sterngriff bzw. Betätigungselement 18, welches ein Innengewinde 60 enthält. In das Innengewinde 60 greift ein Spanndorn 62 mit einem korrespondierenden Außengewinde. Der Spanndorn 62 durchdringt eine Hülse 64, welche im wesentlichen steif ausgebildet ist und in deren Verlängerung ferner das Spannelement 16 in Form einer Spannhülse angeordnet ist. Das Betätigungselement 18 ist über Scheiben 66, 68 sowie einer Federscheibe 70 abgestützt. Durch Drehen des Betätigungselements 18 kann der Spanndorn 62 in Längsrichtung verschoben werden. Wird der Spanndorn 62 in Richtung des Pfeiles 72 nach oben bewegt, so wird die Spannhülse 16 radial aufgeweitet und hierdurch die Arretierung in dem erwähnten Zentrierloch und das Festspannen der Vorrichtung in der oben bereits erläuterten Weise durchgeführt.

### Bezugszeichen

- 2: Traverse
- 4: Spanneinrichtung
- 6: Trenneinrichtung
- 8: Sechskant
- 10: Ausnehmung in 2
- 12-14: Arm von 2
- 16: Spannelement
- 18: Betätigungselement
- 20: Auflagefläche
- 22: Zentrierfläche
- 24: Handgriff
- 26: Armatur
- 28: Rohr
- 30: Sattel
- 32: Heizwicklung
- 34: Stutzen
- 36: Achse
- 37: axiale Stirnfläche von 34
- 38: Zentrierloch
- 40: Trennwerkzeug / Bohrfräser
- 42: Scheitelpunkt
- 44: Rohrstück
- 46: Gewindebohrung
- 48: Wätzlager
- 50: Stellring
- 52: Gleitlager
- 54: Schiebehülse
- 56: Pfeil
- 58: Außenfläche von 44
- 60: Innengewinde
- 62: Spanndorn
- 64: Hülse
- 66, 68: Scheibe
- 70: Federscheibe
- 72: Pfeil

## Patentansprüche

1. Vorrichtung zur Herstellung einer Verbindung einer Armatur (26), welche einen Stutzen (34) enthält, mit einem Rohr (28), enthaltend eine auf den Stutzen (34) aufsetzbare Traverse (2), eine Spanneinrichtung (4), mittels welcher die Armatur (26) auf der Außenfläche des Rohres (28) festspannbar ist, und eine Trenneinrichtung (6), mittels welcher eine Öffnung in das Rohr (28) einbringbar und aus diesem ein Rohrstück (44) heraustrennbar ist,
**dadurch gekennzeichnet, dass** die Spanneinrichtung (4) ein mit dem herauszutrennenden Rohrstück (44) verbindbares Spannelement (16) enthält und dass die Traverse (2) mit der Trenneinrichtung (6) bezüglich des Stutzens (34) derart drehbar angeordnet ist, dass durch Drehen der Traverse (2) das Rohrstück (44) aus dem Rohr (28) mittels der Trenneinrichtung (6) heraustrennbar ist.

2. Vorrichtung nach Anspruch 1, **dadurch gekennzeichnet, dass** die Spanneinrichtung (4) mit dem genannten Rohrstück (44) in Eingriff bringbar ist, welches nach Herstellung einer Schweißverbindung der Armatur mit dem Rohr (28) aus diesem heraustrennbar ist, und/oder dass die Spanneinrichtung (4) durch den Stutzen (34) hindurch mit dem Rohr (28) in Eingriff bringbar ist.

3. Vorrichtung, insbesondere nach Anspruch 1 oder 2, **dadurch gekennzeichnet, dass** nach dem Verschweißen der Armatur (26) mit dem Rohr (28) die Spanneinrichtung (4) zumindest teilweise derart lösbar ist, dass die Traverse (2) mit der Trenneinrichtung (6) um eine Achse (36) bezüglich des Stutzens (34) drehbar ist.

4. Vorrichtung nach einem der Ansprüche 1 bis 3, **dadurch gekennzeichnet, dass** die Spanneinrichtung (4) ein Betätigungselement (18) aufweist, welches bevorzugt als Handrad oder Sterngriff ausgebildet ist und/oder welches manuell betätigbar ist und/oder mit welchem ein axial bewegbarer Spanndorn (62) gekoppelt ist.

5. Vorrichtung nach einem der Ansprüche 1 bis 4, **dadurch gekennzeichnet, dass** das Spannelement (16) als Spannhülse ausgebildet ist, welche mit einem Zentrierloch (38) oder dergleichen des herauszutrennenden Rohrstückes (44) in Eingriff bringbar ist.

6. Vorrichtung nach einem der Ansprüche 1 bis 5, **dadurch gekennzeichnet, dass** das Trennwerkzeug (40) zur Achse (36), um welche die Traverse (2) drehbar ist, einen vorgegebenen Abstand aufweist und/oder dass als Trennwerkzeug (40) ein Bohrfräser vorgesehen ist.

7. Vorrichtung nach einem der Ansprüche 1 bis 6, **dadurch gekennzeichnet, dass** die Traverse (2) eine Auflagefläche (20) aufweist, welche insbesondere auf die axiale Stirnfläche (37) des Stutzens (34) auflegbar ist, und/oder dass die Traverse (2) eine Zentrierfläche (22) enthält, welche insbesondere an der Innenfläche des Stutzens (34) zur Anlage bringbar ist.

8. Vorrichtung nach einem der Ansprüche 1 bis 7, **dadurch gekennzeichnet, dass** die Traverse (2) sternförmig ausgebildet ist und/oder wenigstens zwei, bevorzugt drei, Arme (12-14) enthält, welche auf die axiale Stirnfläche (37) des Stutzens (34) auflegbar sind.

9. Vorrichtung nach einem der Ansprüche 1 bis 8, **dadurch gekennzeichnet, dass** das Trennwerkzeug (40) derart angeordnet ist, dass die in das Rohr einzubringende Öffnung eine im wesentlichen zylindrische Innenfläche aufweist, und/oder dass das Trennwerkzeug (40) in einem vorgegebenen Winkel zur Achse (36) geneigt angeordnet ist.

10. Vorrichtung nach Anspruch 9, **dadurch gekennzeichnet, dass** das Trennwerkzeug als Bohrfräser (40) ausgebildet und derart angeordnet ist, dass seine radial außenliegende Fläche (58) im wesentlichen koaxial zur Achse (36) verläuft, und/oder daß der Bohrfräser (40) konisch ausgebildet ist.

## Claims

1. Device for producing a connection between a fitting (26), containing a connection piece (34) with a pipe (28) containing a crosshead (2) which can be placed on the connection piece (34), a fixing device (4) by means of which the fitting (26) can be secured to the outer face of the pipe (28), and a separating device (6) by means of which an opening can be introduced into the pipe (28) and from which a pipe segment (44) can be separated, **characterised in that** the fixing device (4) contains a fixing element (16) which can be connected to the pipe segment (44) to be separated, and **in that** the crosshead (2) with the separating device (6) is rotatably arranged with respect to the connection piece (34) such that by rotating the crosshead (2), the pipe segment (44) can be separated from the pipe (28) by means of the separating device (6).

2. Device according to claim 1, **characterised in that** the fixing device (4) can be brought into engagement with said pipe segment (44), which segment, after producing a welded joint between the fitting and the pipe (28), can be separated from the pipe and/or **in that** the fixing device (4) can be brought into engagement with the pipe (28) through the connection piece (34).

3. Device, in particular according to claim 1 or 2, **characterised in that** after welding the fitting (26) to the pipe (28), the fixing device (4) can be at last partially detached, **in that** the crosshead (2) with the separating device (6) can be rotated, with respect to the connection piece (34), about an axis (36).

4. Device according to any of claims 1 to 3, **characterised in that** the fixing device (4) comprises an actuating element (18) which is preferably constructed as a hand wheel or star grip and/or which can be manually actuated and/or with which an axially movable tensioning spindle (62) is coupled.

5. Device according to any of claims 1 to 4, **characterised in that** the fixing element (16) is designed as a fixing sleeve which can be brought into engagement with a centring hole (38) or the like of the pipe segment (44) to be separated.

6. Device according to any of claims 1 to 5, **characterised in that** the separating tool (40) has a predetermined spacing from the axis (36) about which the crosshead (2) can be rotated, and/or **in that** a countersink is provided as the separating tool (40).

7. Device according to any of claims 1 to 6, **characterised in that** the crosshead (2) comprises a bearing face (20) which, in particular, can be placed on the axial end face (37) of the connection piece (34), and/or **in that** the crosshead (2) contains a centring face (22) which can be brought to rest, in particular, on the inner face of the connection piece (34).

8. Device according to any of claims 1 to 7, **characterised in that** the crosshead (2) is star-shaped and/or contains at least two, preferably three, arms (12 to 14) which can be placed on the axial end face (37) of the connection piece (34).

9. Device according to any of claims 1 to 8, **characterised in that** the separating tool (40) is arranged such that the opening to be introduced into the pipe comprises a substantially cylindrically inner face and/or **in that** the separating tool (40) is arranged inclined at a predetermined angle to the axis (36).

10. Device according to claim 9, **characterised in that** the separating tool is designed as a countersink (40) and is arranged such that its radially outer face (58) runs substantially coaxially to the axis (36), and/or **in that** the countersink (40) is conical.

## Revendications

1. Dispositif pour établir une connexion entre une robinetterie (26), qui comprend un embout (34), et un tuyau (28), comprenant une traverse (2) applicable sur l'embout (34), un dispositif de serrage (4) au moyen duquel la robinetterie (26) peut être serrée sur la surface extérieure du tuyau (28), et un dispositif de séparation (6) au moyen duquel une ouverture peut être réalisée dans le tuyau (28) et une partie (44) du tuyau peut être séparée de celui-ci,
***caractérisé en ce que*** le dispositif de serrage (4) comprend un élément de serrage (16) pouvant être relié à la partie (44) de tuyau à séparer et ***en ce que*** la traverse (2) est montée rotative avec le dispositif de séparation (6) par rapport à l'embout (34) de telle manière que, par rotation de la traverse (2), la partie (44) du tuyau peut être séparée du tuyau (28) au moyen du dispositif de séparation (6).

2. Dispositif selon la revendication 1, ***caractérisé en ce que*** le dispositif de serrage (4) peut être mis en prise avec ladite partie (44) de tuyau qui, après établissement d'une connexion soudée de la robinetterie avec le tuyau (28), peut être séparée de celui-ci, et/ou ***en ce que*** le dispositif de serrage (4) peut être mis en prise à travers le tuyau (34) avec le tuyau (28).

3. Dispositif, en particulier selon la revendication 1 ou 2, ***caractérisé en ce qu***'après le soudage de la robinetterie (26) avec le tuyau (28), le dispositif de serrage (4) est au moins partiellement libérable de telle manière que la traverse (2) puisse tourner avec le dispositif de séparation (6) autour d'un axe (36) par rapport à l'embout (34).

4. Dispositif selon l'une quelconque des revendications 1 à 3, ***caractérisé en ce que*** le dispositif de serrage (4) présente un élément d'actionnement (18) qui est conformé de préférence en volant ou en poignée en étoile et/ou qui peut être actionné manuellement et/ou avec lequel est couplée une broche de serrage (62) mobile axialement.

5. Dispositif selon l'une quelconque des revendications 1 à 4, ***caractérisé en ce que*** l'élément de serrage (16) est conformé en douille de serrage, qui peut être mise en prise avec un trou de centrage (38) ou analogue de la partie (44) de tuyau devant être séparée.

6. Dispositif selon l'une quelconque des revendications 1 à 5, ***caractérisé en ce que*** l'outil de séparation (40) présente une distance prédéterminée par rapport à l'axe (36) autour duquel peut tourner la traverse (2) et/ou ***en ce que,*** comme outil de séparation (40), il est prévu une fraise taraudeuse.

7. Dispositif selon l'une quelconque des revendications 1 à 6, ***caractérisé en ce que*** la traverse (2) présente une surface d'appui (20) qui peut être appliquée en particulier sur la surface frontale axiale (37) de l'embout (34) et/ou ***en ce que*** la traverse (2) comprend une surface de centrage (22) qui peut être mise en appui en particulier contre la surface intérieure de l'embout (34).

8. Dispositif selon l'une quelconque des revendications 1 à 7, ***caractérisé en ce que*** la traverse (2) est conformée en étoile et/ou comprend au moins deux, et de préférence trois, bras (12-14) qui peuvent être appliqués sur la surface frontale axiale (37) de l'embout (34).

9. Dispositif selon l'une quelconque des revendications 1 à 8, ***caractérisé en ce que*** l'outil de séparation (40) est agencé de telle manière que l'ouverture à réaliser dans le tuyau présente une surface intérieure sensiblement cylindrique, et/ou ***en ce que*** l'outil de séparation (40) est incliné d'un angle prédéterminé par rapport à l'axe (36).

10. Dispositif selon la revendication 9, ***caractérisé en ce que*** l'outil de séparation est conformé en fraise taraudeuse (40) et disposé de telle manière que sa surface extérieure radialement (58) s'étend pour l'essentiel coaxialement à l'axe (36), et/ou ***en ce que*** la fraise taraudeuse (40) est conique.
